(19) Europäisches Patentamt

European Patent Office

Office européen des brevets

(11) **EP 1 075 150 A2**

## (12) EUROPEAN PATENT APPLICATION

(43) Date of publication:
07.02.2001 Bulletin 2001/06

(51) Int. Cl.[7]: **H04N 9/31**

(21) Application number: **00305330.3**

(22) Date of filing: **23.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.07.1999 KR 9931570**
**17.11.1999 KR 9951042**

(71) Applicant: **LG ELECTRONICS INC.**
**Seoul (KR)**

(72) Inventors:
• **Choi, Ho Young**
**#803-401, Shinjeong Village**
**Kyounggi-do (KR)**

• **Moon, Hee Jong**
**216,Jungmyoung Honeyvill Apt.**
**Seoul (KR)**
• **Park, Man Hyo**
**240-402, Jukong Apartment**
**Kyounggi-do, Korea (KR)**

(74) Representative:
**McLeish, Nicholas Alistair Maxwell et al**
**Boult Wade Tennant**
**Verulam Gardens**
**70 Gray's Inn Road**
**London WC1X 8BT (GB)**

(54) **Projection lens system**

(57) A projection lens system that has a compact configuration and is capable of correcting a color aberration. In the system, first and second lenses have a weak refractive power, respectively, and a third lens has a strong positive refractive power. A fourth lens corrects an aberration generated by the third lens, and a fifth lens has a negative refractive power. A diffractive optical element is formed on at least on among the surface of the first to fifth lenses. A color aberration and a spherical aberration is corrected with the diffractive optical element, so that a high resolution can be realized without increasing the number of lenses and the manufacturing cost can be reduced.

FIG.3

EP 1 075 150 A2

**Description**

**BACKGROUND OF THE INVENTION**

Field of the Invention

This invention relates to a projection lens system for a projection device, and more particularly to a compact projection lens system that is capable of correcting a color aberration.

Description of the Related Art

Recently, there has been rapidly spread a projection-type device for magnificently projecting a small-size image using a projection lens as a request for a large-scale screen and a high quality image in a display device increases. The projection-type device is largely classified into a front projection system and a rear projection system depending on a direction in which a picture is projected onto a screen. The rear projection system has been more highlighted on an advantage in that it can display a relatively bright picture even at a place where a peripheral environment thereof is bright. A typical rear projection device includes a projection television (TV). The projection TV does mainly use a cathode ray tube (CRT) and a liquid crystal display, etc. as a light source for implementing a small picture. A small picture re-expressed on the CRT or the liquid crystal panel is enlarged by the projection lens and thereafter is projected onto the rear surface of the screen in such a manner to be displayed as a large picture.

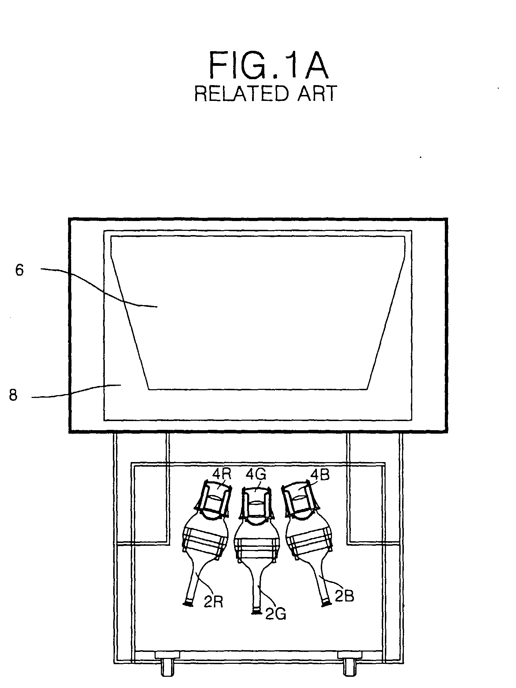

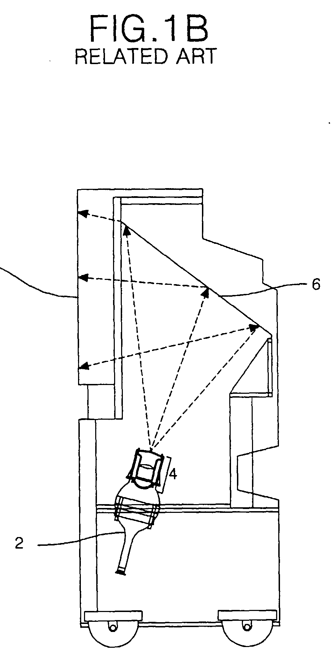

Referring to Fig. 1A and Fig. 1B, there are shown a front internal structure and a side internal structure of a projection TV using a light source as the conventional CRT, respectively. The projection TV includes a CRT 2 for displaying a picture corresponding to image signals, a projection optical system 4 for magnificently projecting the picture displayed on the CRT 2, a reflecting mirror 6 for reflecting the picture projected from the projection lens system 4 into a screen 8, and a screen 8 for displaying the picture projected magnificently by the projection lens system 4. As shown in Fig. 1A, the CRT 2 consists of red, green and blue CRTs 2R, 2G and 2B to display each of red, green and blue color pixel. The projection lens system 4 consists of red, green and blue projection lens systems 4R, 4G and 4B arranged at an outlet of each red, green and blue CRT 2R, 2G and 2B to magnificently project a picture from each red, green and blue CRT 2R, 2G and 2B. The reflecting mirror 6 allows the screen 8 to display a large color picture by reflecting a picture projected magnificently by means of the red, green and blue projection lens systems 4R, 4G and 4B to be imaged on the screen 8. In this case, the projection lens system 4 requires to assure a performance capable of resolving scanning lines on the CRT through corrections of a spherical aberration, an astigmatism, a distortion and a color aberration in order to realize a high definition. To this end, each of the red, green and blue projection lens systems 4R, 4G and 4B consists of a plurality of plastic lenses and a glass lens.

The basic configuration of the projection lens system is described in detail in U.S. Patent Nos. 4,300,817, 4,384,081, 4,526,442 and 4,697,892. Also, U.S. Patent No. 4,685,774 discloses a projection lens system for increasing a variation of refractive power in an aspheric surface in the optical axis and the margin to correct an aberration generated along with the increasing of field view angle. Further, U.S. Patent No. 4,776,581 teaches a projection lens system capable of increasing the field view angle and being compact. However, the projection lens system disclosed in U.S. Patent Nos. 4,300,817, 4,384,081, 4,526,442, 4,697,892, 4,685,774 and 4,776,581 can not obtain a good performance in the brightness and so on, due to F/# of about 1.0. In other words, the projection lens system must have the F/# of below 1.0. However, the projection lens system disclosed in the above U.S. Patents can not obtain the F/# of below 1.0 by the proposed lens configuration and the dispersion of refractive power.

Also, U.S. Patent No. 4,963,007 discloses an axial chromatic correction as an aberration correction art. conventionally, the axial chromatic correction is defined as the following equation:

$$K/\nu = K_1 / (\nu_1 + K_2)/ \nu_2 \tag{1}$$

Wherein, = $K_1$ and $K_2$ are refractive powers of lens elements L1 and L2, and $\nu_1$ and $\nu_2$ are values of dispersion (1/Abbe's number) for the lens elements L1 and L2. $\nu_1$ and $\nu_2$ can correct the axial chromatic aberration because having an infinite value when the value of K/$\nu$ in the equation (1) is "0". The projection lens system proposed in the U.S. Patent No. 4,963,007 distributes appropriately the refractive power and combines lenses having the dispersion value different from each other so as to correct the axial chromatic aberration. Also, a projection lens system disclosed in U.S. Patent No. 5,272,540 teaches a configuration of cemented doublet for correcting the axial chromatic aberration. These projection lens systems disclosed in the above U.S. Patents are adapted to correct the axial chromatic aberration because lenses is split according to the dispersion of refractive power or the cemented doublet is used for the projection lens system. However, these projection lens systems allow to cost up due to the increasing of unnecessary lenses. The projection lens system described in the above U.S. Patent No. 4,963,007 combines glass lenses of Flint series and Crown series or plastic lenses of polystyrene and acrylic series so as to correct the axial chromatic aberration. Also, the projection lens system disclosed in the above U.S. Patent No. 5,272,540 employs a cemented doublet, which lenses of different Abbe's number is banded, so as to correct the optical axial chromatic aberration. The configuration of the projection lens system disclosed in the above U.S. Patent No. 5,272,540 is shown in Fig. 2.

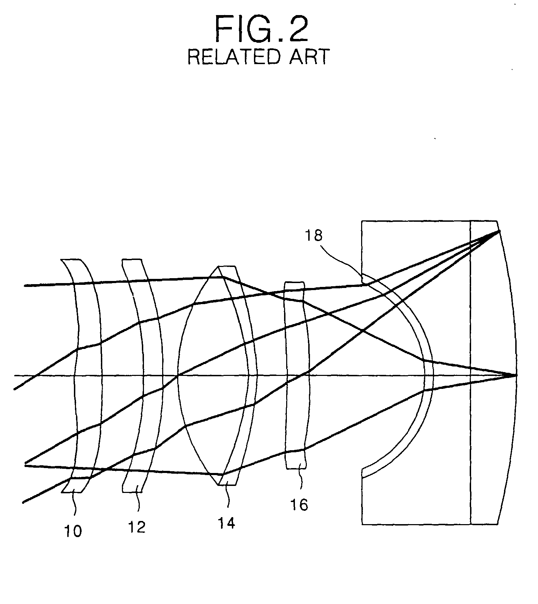

The projection lens system of Fig. 2 includes first and second lenses 10 and 12 having a weak refractive power, a third lens 14 responsible for a major positive refractive power of the projection lens system, a fourth lens 16 having a weak positive refractive power, and a fifth lens 18 having a strong refractive power. The first lens 10 plays a role to correct a spherical aberration while the second lens 12 plays a role to correct a comma aberration and astigmatism. These first and second lenses 10 and 12 are made from a plastic material. The fourth and fifth lenses 16 and 18 are made from a plastic material, which plays a role to correct astigmatism. The third lens 14 consists of a doublet made from a glass to correct a color aberration. In other words, the third lens 14 corrects a color aberration using a combination of lenses having a positive refractive power with lenses having a negative refractive power.

As described above, the projection lens system disclosed in U.S. patent no. 5,272,540 consists of a doublet and a plurality of lenses so as to correct a color aberration and various optical aberrations. Because the projection system of U.S. patent no. 5,272,540 has a number of lenses, it has a difficult in making a small dimension construction and causes a rise in a manufacturing cost. This requires a projection lens system capable of realizing a high resolution and a high brightness with reducing the number of lenses.

## SUMMARY OF THE INVENTION

Accordingly, it is an object of the present invention to provide a projection lens system capable of realizing a high definition and a high brightness by correcting a chromatic aberration and designing in low F number (F/#).

In order to achieve these and other objects of the invention, a projection lens system according to an aspect of the present invention includes a plurality of refractive lenses and at least one diffractive optical element formed on at least one among the surfaces of the refractive lenses.

A projection lens system according to another aspect of the present invention includes a plurality of refractive lenses and at least one diffractive optical element formed on at least one among the faces of the refractive lenses to correct aberrations at an axis and the outside of the axis.

A projection lens system according to still another aspect of the present invention includes a first lens for correcting an aberration generated by a variation of height from a light axis, the first lens having at least one surface formed with diffractive optical element thereon; a second lens for refracting lights passed through the first lens; and a third lens for correcting a field curvature and an astigmatism of the lights passed through the second lens.

A projection lens system according to still another aspect of the present invention includes: a first lens having a positive refractive power at the center thereof and a negative refractive power at the peripheral thereof; a second lens having a relatively large positive refractive power; a third lens having a positive refractive power; a fourth lens having a negative refractive power; and at least one diffractive optical element formed on at least one among the surfaces of the lenses.

A projection lens system according to still another aspect of the present invention includes: a first lens having a weak refractive power; a second lens having a weak refractive power; a third lens having a strong positive refractive power; a fourth lens for correcting an aberration being in lights from the third lens; and a fifth lens having a negative refractive power; and at least one diffractive optical element formed on at least one among the surfaces of the lenses.

## BRIEF DESCRIPTION OF THE DRAWINGS

These and other objects of the invention will be apparent from the following detailed description of the embodiments of the present invention with reference to the accompanying drawings, in which:

Fig. 1A and Fig. 1B are a front view and a side view of a conventional rear projection device, respectively;
Fig. 2 is a detailed view of the conventional projection lens system;
Fig. 3 is a detailed view of a projection lens system according to an embodiment of the present invention;
Fig. 4 is a view of a light path explaining a diffractive characteristic of light by a lens designed with a diffractive optical element adapted to the present invention;
Fig. 5 is a view showing a converging state of lights by first diffractive lights when a diffractive optical element is adapted to a flat surface;
Fig. 6 is a detailed view of a projection lens system according to another embodiment of the present invention;
Fig. 7A and Fig. 7B illustrate a dispersion characteristic of a refracting lens and a diffractive optical element to a light beam, respectively;
Fig. 8 is a graph showing a relationship of a phase amount to the diffractive surface of the diffractive optical element.

Fig. 9A and 9B are graphs showing a chromatic aberration correction characteristic of the projection lens system according to an embodiment of the present invention; and

Fig. 10 is a detailed view of a projection lens system according to still another embodiment of the present invention.

## DETAILED DESCRIPTION OF THE PREFERRED EMBODIMENT

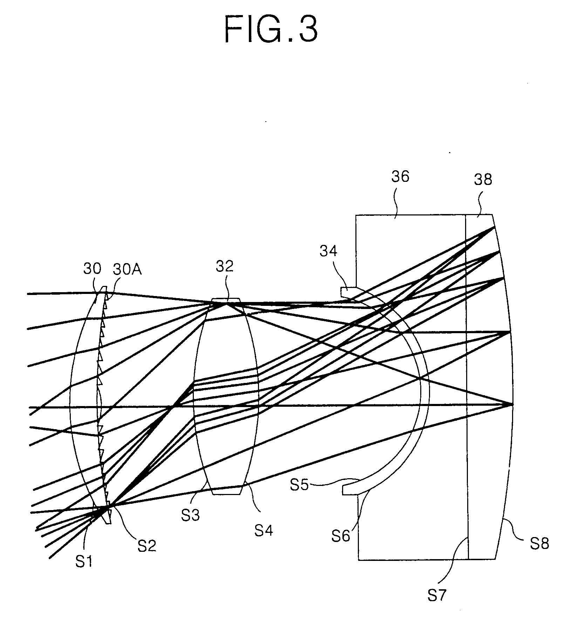

Fig. 3 shows a projection lens system according to an embodiment of the present invention. The projection lens system of Fig. 3 includes three lenses 30, 32 and 34. A side surface of the first lens 30 is designed a surface having a diffractive optical function, thereby enhancing a performance of lens system and allowing a mechanism to be small in size. To this end, the projection lens system of Fig. 3 includes the first lens 30 having a diffractive optical surface; the second lens 32 for refracting lights passed through the first lens 30; and the third lens 34 for correcting a field curvature and an astigmatism of the lights passed through the second lens. The front surface S1 of the first lens 30 is formed in aspheric surface and the rear surface S2 of the first lens 30 is formed to have a diffractive optical element 30A thereon. The first lens 30 corrects a spherical aberration of optical system. In this case, the diffractive optical surface S2 is very effective relative to the other lenses having a substantially equal dispersion characteristic because of having a negative dispersion characteristic, in the correction of axial chromatic aberration. Also, the diffractive optical surface S2 is fabricated by a plastic molding process such that a mass-productivity enhances and a manufacturing cost decreases. The second lens 32 has very strong refractive power because of being a spherical glass lens. Since the second lens 32 is insensible to the temperature variation, the second lens 32 can assure a stable performance against the variation of external temperature. The third lens 34 is formed in a concave shape and installed to a coolant 36 on the front surface of cathode ray tube panel 38. The third lens 34 corrects a field curvature and distortion aberrations.

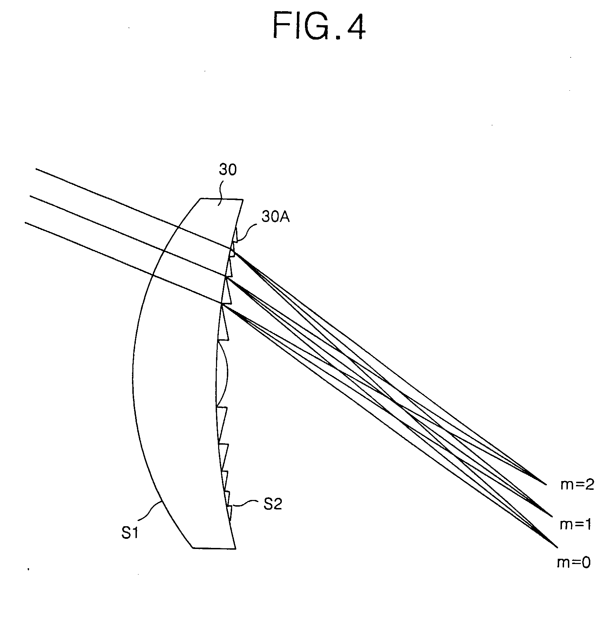

The diffractive optical surface S2 employed to the projection lens system is formed in a fine structure of micron size, as shown in Fig. 4. The diffractive optical surface S2 shown in Fig. 4 makes to diffract instead of to refract lights refracted at which the lights have passed through the front surface S1 of the first lens 30. In this case, the diffractive lights is separated into 0th order diffractive lights (m=0), first order diffractive lights (m=±1), second order diffractive lights (m=±2), and higher order diffractive lights above third order by the characteristic of the diffractive optical element 30A. If the pitch, the structure and the depth of the diffractive optical element 30A are adjusted, the diffractive lights of desirable order can be obtained. Such a characteristic of diffractive optical element 30A is employed, the refractive lens can obtain a substantially high refractive index by only a shape of lattice regardless to a refractive index of material, a curvature of lens and a thickness determining the refractive power. Also, if it is appropriately adjusted a phase term of the diffractive optical element 30A, which has many coefficients, as an aspherical surface, the aberration is effectively corrected.

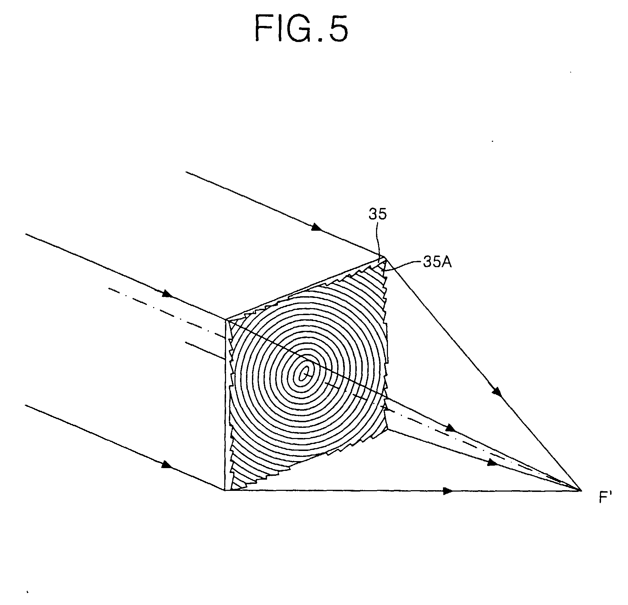

Also, a desired refractive power can be obtained when the diffractive optical element 30A is formed on one surface of the flat panel 35 as shown in Fig. 5. The diffractive optical element 30A formed on the flat panel 35 has a positive refractive power in spite of the flat surface. This results from that the diffractive optical element 30A is designed to provide with the 1st order diffractive lights and to eliminate the high order diffractive lights. To this end, the refractive lens employing the diffractive optical element can obtain a desirable refractive power by only the flat surface without the curvature for providing a negative or a positive refractive power to the refractive lens. Such a characteristic of the diffractive optical element 30A forces the thickness and size of the lens system to be small.

Table 1 represents first data regarding the radius r of each lens surface, distances d between the lenses, the refractive power Nd and Abbe's number $v_d$ of each lens. Tables 2 and 3 represent first coefficient values defining a shape of aspherics and diffractive optical element 30A, respectively.

Table 1

| Lens | Surface | r | d | Nd | $v_d$ |
|---|---|---|---|---|---|
| First Lens | S1 | 65.841 | 6.930 | 1.4915 | 57.8 |
| | S2 | 200.000 | 30.437 | | |
| Second Lens | S3 | 98.102 | 20.000 | 1.5943 | 62.0 |
| | S4 | -92.729 | 35.026 | | |
| Third Lens | S5 | -54.000 | 3.500 | 1.5090 | 51.9 |
| | S6 | -50.000 | 9.000 | 1.4395 | 62.8 |

Table 1 (continued)

| Lens | Surface | r | d | Nd | $\nu_d$ |
|---|---|---|---|---|---|
| CRT Panel | S7 | Flat | 14.100 | 1.5632 | 55.2 |
| | S8 | -350.000 | | | |

Table 2

| | K | A | B | C | D | E |
|---|---|---|---|---|---|---|
| S1 | -0.1597 | -0.5007E-09 | -0.4273E-07 | 0.4141E-12 | -0.3524E-15 | 0. 6939E-19 |
| S2 | -3.2887 | -0.1541E-04 | 0. 2379E-07 | -0.3023E-10 | 0. 1776E-13 | -.3834E-17 |

Table 3

| | HZ1 | HZ2 | HWL | C1 | C2 | C3 |
|---|---|---|---|---|---|---|
| S2 | -0.1000E 3 | -0.1100E 3 | 544.00 | 4.1763-05 | 9.9045E-08 | 7.7178E-11 |

Table 4 represents first data regarding the radius r of each lens surface, distances d between the lenses, the refractive power Nd and Abbe's number $\nu_d$ of each lens. Tables 5 and 6 represent first coefficient values defining a shape of aspherics and diffractive optical element 30A, respectively.

Table 4

| Lens | Surface | r | d | Nd | $\nu_d$ |
|---|---|---|---|---|---|
| First Lens | S1 | 65.841 | 6.930 | 1.4915 | 57.8 |
| | S2 | 200.000 | 30.437 | | |
| Second Lens | S3 | 98.102 | 20.000 | 1.5943 | 62.0 |
| | S4 | -92.729 | 35.026 | | |
| Third Lens | S5 | -54.000 | 3.500 | 1.5090 | 51.9 |
| | S6 | -50.000 | 9.000 | 1.4395 | 62.8 |
| CRT Panel | S7 | Flat | 14.100 | 1.5632 | 55.2 |
| | S8 | -350.000 | | | |

Table 5

| | K | A | B | C | D | E |
|---|---|---|---|---|---|---|
| S1 | -0.0656 | -0.5107E-06 | -0.2450E-09 | 0.2173E-12 | -0.1598E-15 | 0.2394E-19 |
| S2 | -0.9022 | -0.1121E-04 | 0.2084E-07 | -0.3039E-10 | 0.2062E-13 | -.5216E-17 |

Table 6

|  | HZ1 | HZ2 | HWL | C1 | C2 | C3 |
|---|---|---|---|---|---|---|
| S2 | -0.1000E-13 | -0.1100E-03 | 544.00 | -1767E-05 | 6.0183E-08 | 7.2765E-17 |

The data represented in tables 1 to 6 have meanings as follows. Firstly, the aspheric coefficients defining a shape of surfaces S1 and S2 of aspherics 30 are determined by the following equation:

$$X(r)=[cr^2/\{1+(1-(1+K)c^2r^2)\}^{1/2}]+Ar^4+Br^6+Cr^8+Dr^{10}+Er^{12} \cdots \quad (2)$$

Wherein, X(r) is a sag value of with reference to a aspheric surface at a height r from an optical axis, c does a curvature of the lens surface at the height r from an optical axis, K does a conic constant, and A to E do aspheric coefficients.

"HZ1" and "HZ2" in tables 3 and 6 are distances from the diffractive optical element 30A to an object point source and to a reference point source. Since the diffractive optical element 30A applied to the projection lens system of the present invention has a spindle symmetrical characteristic, the object and reference point sources are positioned at an optical axis. "HWL" is a reference wave length of light beam which is used to the fabrication of the diffractive optical element 30A. The present invention uses a light beam from a green cathode ray tube, which has the center wave length of 544nm, as the reference wave length. A aspheric phase amount of the diffractive optical element, which is generated by an interference of lights from an object source and a reference source, is determined by the following equation:

$$\varphi(y)=c_1y^2+c_2y^4+c_3y^6+ \cdots \quad (3)$$

wherein $\varphi(r)$ represents a phase at a position corresponding to the height of y from the optical axis, and $c_1$ to $c_3$ to E represent coefficients of the phase item having a aspheric effect. F/# of the projection lens system, which the first data and coefficient values represented in tables 1 to 3 are applied to, is 1.047. Then, a focal length is 74.0 mm. Also, F/# of the projection lens system, which the second data and coefficient values represented in tables 4 to 6 are applied to, is 1.054. Then, a focal length is 78.2449 mm. In the projection lens system of Fig. 3, which the data described above is adaptable to, facilitates a combination and adjustment thereof because all of the aspherics 30 and the diffractive optical element 30A has the spindle symmetrical characteristic against the optical axis.

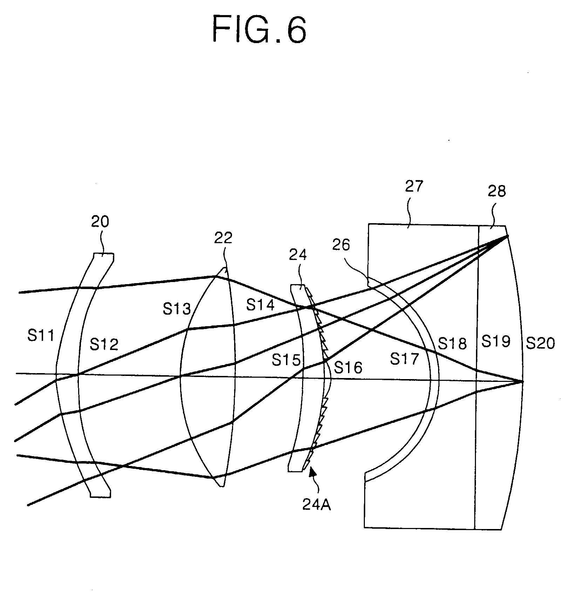

Referring to Fig. 6, there is shown a projection lens system according to an embodiment of the present invention. The projection lens system includes a first lens 20 having a positive refractive power at the center thereof and having a negative refractive power at the peripheral thereof, a second lens 22 having a positive refractive power, a third lens 24 having a positive refractive power and provided with a diffractive optical element (DOE) at one side thereof, and a fourth lens 36 having a negative refractive power. The first lens 20 consists of a aspheric lens made from a plastic material to correct a spherical aberration. Also, the first lens 20 has a positive refractive power at the center thereof and a negative refractive power at the peripheral thereof to correct a comma aberration and an astigmatism. The second lens 22 is made from a glass material and is responsible for the majority of entire refractive power in the projection lens system. The third and fourth lenses 24 and 26 consist of a plastic lens to correct an astigmatism and field curvature. The third lens 34 has a structure in which a diffractive optical element 24A is formed at one side of the lens with a positive refractive power so as to correct a color aberration.

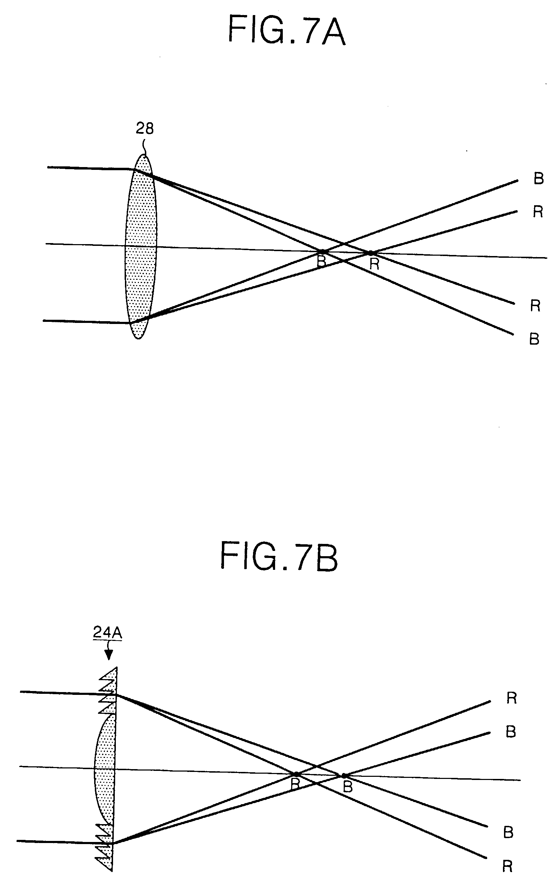

In detail, conventional refractive lens 28 enables a focal length of blue light beam to be shorter than that of red light beam, among the light beams having color signals as shown in Fig. 7A. Meanwhile, the diffractive optical element 24A forces a focusing distance of red light beam to be shorter than that of blue light beam, among the light beams having color signals as shown in Fig. 7B. In this case, the Abbe's number ud representing the dispersion of refractive lens 28 is determined by following equation:

$$\nu_d = (N_d - 1) / (N_F - N_c) \quad (4)$$

Wherein, "N" is a refractive index at a spectrum wave length of each added letter. Also, when a wave length of spectrum ray for each added letter is "λ", Abbe's number of diffractive optical element 24A is determined by following equation:

$$\nu_d = \lambda_d / (\lambda_F - \lambda_c) = -3.45 \quad (5)$$

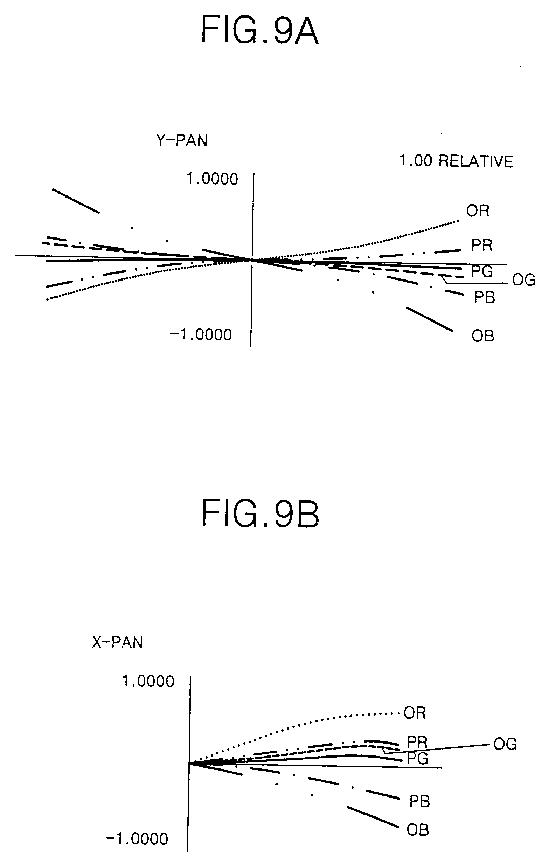

As seen in equations 4 and 5, Abbe's number ud of the refractive lens 28 has the positive value of about 25 to 65, while Abbe's number of the diffractive optical element 30A the negative value of -3.45. In other words, the refractive lens 28 and the diffractive optical element 30A have the chromatic dispersion characterists opposite to each other. To this end, the third lens 24 including a plastic lens (i.e., a refractive lens) having a positive refractive power and the diffractive optical element 24A having the diffractive characteristic and being formed on the surface of the plastic lens corrects by using the oppsosite chromatic dispersion characteristics. The projection lens system shown in Fig. 6 has a good chromatic aberration correction characteristic by the third lens 24, as shown in Fig. 9A and 9B. In Figs. 9A and 9B, "PR", "PG" and "PB" are light characteristic by the present invention, and "OR", "OG" and "OB" are light characteristic by the prior art. As seen in a chromatic aberration graph varying along with the height y from the optical axis on the Y axis shown in Fig. 9A and a chromatic aberration graph in accordance with the height y from the optical axis on the X axis shown in Fig. 9B, the third lens 24 forces the chromatic aberrations for the red, green and blue to decrease, thereby enhancing the chromatic aberration correction characteristic.

Table 7 represents data regarding the radius of curvature r of each lens surface, distances d between the lenses, the refractive power $N_d$ and abbe's number $v_d$ of each lens, which is adaptable to the projection lens system shown in Fig. 6. Tables 8 represents coefficient values defining a shape of aspherics and diffractive optical element 30A as shown in Fig. 6.

Table 7

| LENS | S | r | d | $N_d$ | $v_d$ |
|------|-----|---------|---------|--------|-------|
| 1ST LENS | S11 | 72.4300 | 8.6400 | 1.4935 | 57.8 |
| | S12 | 80.9700 | 28.8000 | | |
| 2ND LENS | S13 | 73.6700 | 25.0000 | 1.5916 | 62.0 |
| | S14 | -215.3300 | 20.0200 | | |
| 3RD LENS | S15 | -359.8100 | 8.0000 | 1.4938 | 57.8 |
| | S16 | -94.5 | 29.55 | | |
| 4TH LENS | S17 | -49.5100 | 3.5000 | 1.4938 | 57.8 |
| | S18 | -47.0000 | 12.9400 | 1.4392 | 62.8 |
| CRT PANEL | S19 | Infinity | 14.1000 | 1.5551 | 55.2 |
| | S20 | -350.0000 | 0.000 | | |

TABLE 8

| LENS SURFACE | K | A | B | C | D | E |
|--------------|-----------|-----------|------------|-----------|-----------|------------|
| S11 | -1.3480E+00 | 1.6080E-07 | -8.4679E-10 | 1.5770E-13 | 1.3850E-17 | -2.9262E-21 |
| S12 | 5.0000E-02 | 5.3046E-07 | -1.8278E-09 | 1.4642E-12 | -7.9311E-16 | 2.5535E-19 |
| S15 | 8.3325E+01 | -1.5942E-06 | -6.9339E-10 | 3.800E-13 | -6.0061E-16 | 2.0398E-19 |
| S16 | -14.987 | 9.66E-07 | 5.32E-10 | -3.77E-13 | -3.26E-17 | 0 |
| S17 | 0.432533 | -3.12E-06 | 1.09E-08 | -1.90E-11 | 1.80E-14 | -8.65E-18 |
| S16(DOE) | 0 | -4.45E-04 | 0 | 0 | 0 | 0 |

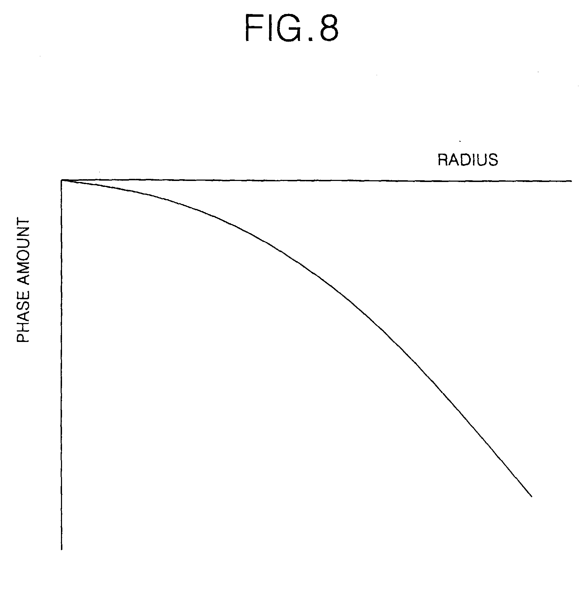

In Table 8, the coefficient values determining the shape of the first lens 20 formed in a aspheric surface and the shapes of the third and fourth lenses 24 and 26 are defined by the equation 2 as described above. Also, a aspheric phase amount of the diffractive optical element 24A generated by an interference between a object source and a reference source in the diffractive optical element 24A is determined by the phase amount equation 3 described above. The phase amount of the diffractive optical element 24A applicable to the present invention has a characteristic reduced in proportion to the height r from the optical axis as shown in Fig. 8. The phase amount characteristic graph of the diffractive optical element 24A shown in Fig. 8 is related to a zone number of the diffractive optical element 24A, and which shows a requirement for an optimum design of the phase amount for which the diffractive optical element 24A for the purpose of improving an optical performance in consideration of a diffraction efficiency and a working performance of lens. To this end, the diffractive optical element 24A is formed in such a manner that a plurality of recesses with a concentric circles shape has a rotational symmetry, and a pitch of the recess becomes smaller as it goes from the center into the peripheral. A chromatic aberration, a spherical aberration and a distortion aberration, etc. can be corrected by combining such a diffractive optical element 24A with the aspheric plastic lens. Accordingly, it is not required to additionally use lenses of an expensive material having a negative refractive power and enlarging a dispersion of beam like the prior art so as to correct a color aberration, so that the present invention is capable of reducing a manufacturing cost and is advantageous in making a small-size projection lens system. Also, the projection lens system can be made into a thinner type as a focus length of the projection lens system becomes shorter. To this end, it is desirable that the second lens 22 responsible for the majority of the entire refractive power is designed to have a large refractive power. When the refractive power is large, however, a spherical aberration is generated to thereby have a limit in enlarging a refractive power of the second lens 22. Accordingly, a refractive power of the second lens 22 is distributed to the diffractive optical element 24A to raise a refractive power of the projection lens system and thus reduce the entire focal length, so that a thin-type device can be made.

Furthermore, a brightness of the projection lens system can be improved with the aid of the diffractive optical element 24A. In other words, a refractive power is distributed to the diffractive optical element 24A to reduce a focal length of the projection lens system, so that a brightness of the projection lens system can be improved. This is because a brightness of the projection lens system is in inverse proportion to a square of F/# having a relationship proportional to a focus length f as indicated in the following equation:

$$\text{Brightness} \propto 1 / (F/\#)^2, \; F/\# = f/D \tag{3}$$

wherein D represents a diameter of the lens. Since F/# becomes smaller as the entire focal length of the projection lens system is smaller as seen from said equation (6), a brightness of the projection lens system being in inverse proportional to a square of F/# becomes better so that a high brightness can be realized.

As described above, the present projection lens system employs the diffractive optical element 24A to correct a color aberration and a spherical aberration, etc., thereby improving an optical performance without increasing the number of lenses. Also, the present projection lens system employs the diffractive optical element 24A to undertake partial responsibility for a refractive power and thus reduce the entire focal length, so that a thin-type device and a high brightness can be obtained. In addition, the present projection lens system takes advantage of the first lens 20 having a aspheric surface and having a positive refractive power at the center thereof and a negative refractive power at the peripheral thereof to compensate for optical aberrations (i.e., a spherical aberration, a waveform aberration and an astigmatism), thereby reducing the number of lenses.

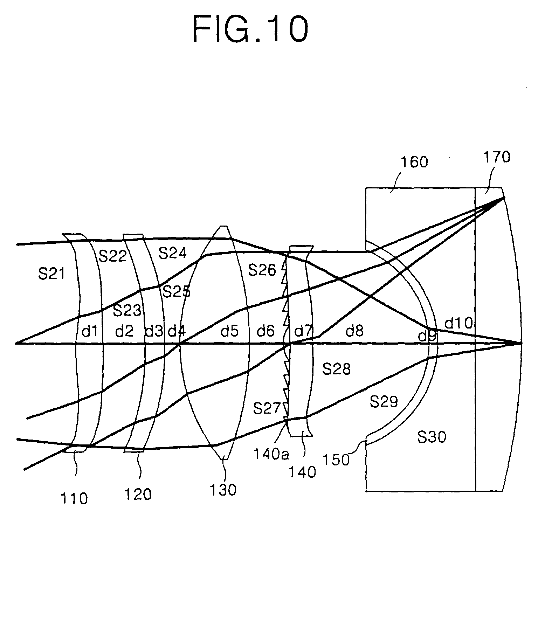

Fig. 10 shows a projection lens system according to an embodiment of the present invention. The projection lens system of Fig. 10 includes a first lens 110 having a positive refractive power, a second lens 120 having a weak refractive power, a third lens 130 having a positive refractive power, a fourth lens 140 having a diffractive optical element (DOE) 140a formed on one side thereof, and a fifth lens 90 having a negative refractive power. The first and second lenses 110 and 120 consist of an aspheric lens made from a plastic material to correct a spherical aberration. The third lens 130 is made from a glass material and is responsible for the majority of entire refractive power in the projection lens system. The fourth and fifth lenses 140 and 150 consist of a plastic lens to correct an astigmatism and field curvature. The fourth lens 140 has a structure in which a diffractive optical element 140a is formed at one side of the lens with a positive refractive power so as to correct a chromatic aberration. The fourth lens 140 has a good chromatic aberration correction characteristic as the refractive lens and the diffractive optical element 140A have the chromatic dispersion characteristics opposite to each other. The projection lens system has the good chromatic aberration correction characteristic by the fourth lens 140, as shown in Figs. 9A and 9B.

The aspheric phase amount varying along with the height y from the optical axis and defining a surface shape of the diffractive optical element 140A is determined by the phase amount equation 3 described above. The phase amount of the diffractive optical element 140A applicable to the present invention has a characteristic reduced in proportion to the height y from the optical axis as shown in Fig. 8. The phase amount characteristic graph of the diffractive optical element 140A shown in Fig. 8 is related to a zone number of the diffractive optical element 24A, and which shows a requirement for an optimum design of the phase amount for which the diffractive optical element 140A for the purpose of improving an optical performance in consideration of a diffraction efficiency and a working performance of lens. To this end, the diffractive optical element 140A is formed in such a manner that a plurality of recesses with a concentric circles shape has a rotational symmetry, and a pitch of the recess becomes smaller as it goes from the center into the peripheral. A chromatic aberration, a spherical aberration and a distortion aberration, etc. can be corrected by combining such a diffractive optical element 24A with the plastic aspheric lens. Accordingly, it is not required to additionally use lenses of an expensive material having a negative refractive power and enlarging a dispersion of beam like the prior art so as to correct a color aberration, so that the present invention is capable of reducing a manufacturing cost and is advantageous in making a small-size projection lens system. Also, the projection lens system can be made into a thinner type as a focal length of the projection lens system becomes shorter. To this end, it is desirable that the third lens 130 responsible for the majority of the entire refractive power is designed to have a large refractive power. When the refractive power is large, however, a spherical aberration is generated to thereby have a limit in enlarging a refractive power of the third lens 130. Accordingly, a refractive power of the third lens 130 is distributed to the diffractive optical element 140A to raise a refractive power of the projection lens system and thus reduce the entire focus length, so that a thin-type device can be made. Also, a refractive power is distributed to the diffractive optical element 24A to reduce a focus length of the projection lens system, so that a brightness of the projection lens system can be improved. This is because a brightness of the projection lens system is in inverse proportion to a square of F/# having a relationship proportional to a focal length f, as the equation (6) described above.

Table 9 represents first data regarding the radius r of each lens surface, distances d between the lenses, the refractive power $N_d$ and abbe's number $\nu_d$ of each lens, which is adaptable to the projection lens system shown in Fig. 10. Tables 10 represents first coefficient values defining a shape of aspherics 110, 120, 140 and 150 and a surface shape of diffractive optical element 140A as shown in Fig. 10. In table 10, the first coefficient values defining a shape of the aspheric surface in the first, second, fourth and fifth lenses 110, 120, 140 and 150 are determined by the equation (2) as described above.

Table 9

| LENS | LENS SURFACE | r | d | $N_d$ | $\nu_d$ |
|---|---|---|---|---|---|
| 1ST LENS | S21 | 111.000 | 8.600 | 1.494000 | 57.8 |
| | S22 | 299.109 | 14.400 | | |
| 2ND LENS | S23 | -140.000 | 8.200 | 1.494000 | 57.8 |
| | S24 | -155.321 | 3.600 | | |
| 3RD LENS | S25 | 74.500 | 25.000 | 1.592000 | 62.0 |
| | S26 | -220.500 | 9.863 | | |
| 4TH LENS | S27 | -415.000 | 7.000 | 1.494000 | 57.8 |
| | S28 | -115.876 | 33.000 | | |
| 5TH LENS | S29 | -50.782 | 3.500 | 1.494000 | 57.8 |
| | S30 | -45.000 | 9.000 | 1.430000 | 62.8 |
| CRT PANEL | S31 | Infinity | 14.1 | 1.563000 | 55.2 |
| | S32 | -350.0 | 0 | | |

TABLE 10

| LENS SURFACE | K | A | B | C | D | E |
|---|---|---|---|---|---|---|
| S21 | -17.15900 | 1.162E-07 | -1.313E-09 | -4.585E-13 | 4.961E-16 | -1.025E-19 |
| S22 | 0.000000 | 6.029E-07 | 7.796E-10 | -5.599E-13 | 4.406E-16 | -8.283-20 |
| S23 | -10.000000 | 1.717E-06 | -2.944E-10 | -1.286E-12 | 4.009E-16 | 0.000E+00 |
| S24 | -1.727000 | 1.612E-06 | -3.750E-10 | -1.096E-12 | 5.164E-16 | -5.476E-20 |
| S27 | 101.81000 | 5.163E-07 | 3.253E-10 | -1.839E-14 | 4.097E-16 | 0.000E+00 |
| S27(DOE) | 0.000000 | -2.546E-04 | 0.000000 | 0.000000 | 0.000000 | 0.000E+00 |
| S28 | -41.46900 | 2.136E-06 | 3.747E-09 | -3.142E-12 | 1.889E-15 | -2.799E-19 |
| S29 | -0.77700 | 5.140E-06 | 2.687E-09 | -3.730E-12 | 2.504E-15 | -7.896E-19 |

TABLE 10 (continued)

| LENS SURFACE | K | A | B | C | D | E |
|---|---|---|---|---|---|---|
| S30 | 0.000000 | 0.000E+00 | 0.000E+00 | 0.000E+00 | 0.000E+00 | 0.000E+00 |

On the basis of the data represented in tables 9 and 10, the shape of each lens included in the projection lens system according to embodiment of the present invention is decided and designed. Also, there will be described a treating method of the aspheric lens. Actually, the front face of the first lens 110 having the radius of 111.000 is formed by which A to E positions on the spherical lens having a constant radius are treated to correspond to the coefficients in table 10. The first, second, fourth and fifth lenses 110, 120, 140 and 150 are formed by the same treating process.

Table 11 represents second data regarding the radius of r of each lens surface, distances d between the lenses, the refractive power $N_d$ and abbe's number $\nu_d$ of each lens, which is adaptable to the projection lens system shown in Fig. 10. Tables 12 represents second coefficient values defining a shape of aspherics 110, 120, 140 and 150 and a surface shape of diffractive optical element 140A as shown in Fig. 10.

Table 11

| LENS | LENS SURFACE | r | D | $N_d$ | $\nu_d$ |
|---|---|---|---|---|---|
| 1ST LENS | S21 | 101.635 | 8.600 | 1.494000 | 57.8 |
| | S22 | 190.658 | 15.400 | | |
| 2ND LENS | S23 | 280.338 | 8.200 | 1.494000 | 57.8 |
| | S24 | 443.295 | 3.600 | | |
| 3RD LENS | S25 | 78.280 | 25.000 | 1.592000 | 62.0 |
| | S26 | -194.639 | 7.000 | | |
| 4TH LENS | S27 | -712.755 | 7.000 | 1.494000 | 57.8 |
| | S28 | -137.901 | 33.562 | | |
| 5TH LENS | S29 | -48.084 | 3.500 | 1.494000 | 57.8 |
| | S30 | -45.000 | 9.000 | 1.430000 | 62.8 |
| CRT PANEL | S31 | Infinity | 14.1 | 1.563000 | 55.2 |
| | S32 | -350.0 | 0 | | |

TABLE 12

| LENS SURFACE | K | A | B | C | D | E |
|---|---|---|---|---|---|---|
| S21 | -10.000000 | 2.963E-07 | -1.925E-09 | 1.485E-14 | 3.251E-16 | -6.104E-20 |
| S22 | 0.0000000 | 5.029E-7 | -2.422E-09 | 6.559E-13 | 4.874E-17 | -1.649E-20 |
| S23 | -10.0000000 | 1.717E-06 | -2.944E-10 | -1.288E-12 | 4.009E-16 | 0.000E+00 |
| S24 | 0.000000 | 9.716E-07 | 1.142E-10 | -1.612E-12 | 6.936E-16 | -7.465E-20 |
| S27 | 24.65800 | 2.926E-07 | -3.045E-11 | 5.413E-14 | 2.714E-16 | 0.000E+00 |
| S27(DOE) | 0.000000 | -2.000E-04 | 0.000000 | 0.000000 | 0.000000 | 0.000000 |
| S28 | -45.04800 | 1.117E-06 | 1.429E-09 | -6.531E-13 | 4.908E-16 | -1.380E-20 |
| S29 | 0.000000 | 5.236E-06 | 3.978E-09 | -4.788E-12 | 3.183E-15 | -9.871E-19 |
| S30 | 0.000000 | 0.000E+00 | 0.000E+00 | 0.000E+00 | 0.000E+00 | 0.000E+00 |

On the basis of the data represented in tables 11 and 12, the shape of each lens included in the projection lens system according to embodiment of the present invention is decided and designed. Also, there will be described a treating method of the aspheric. Actually, the front face of the first lens 110 having the radius of 101.635 is formed by which A to E positions on the spherical lens having a constant radius are treated to correspond to the coefficients in table 12. The first, second, fourth and fifth lenses 110, 120, 140 and 150 are formed by the same treating process.

Table 13 represents third data regarding the radius of curvature r of each lens surface, distances d between the lenses, the refractive power $N_d$ and abbe's number $\nu_d$ of each lens, which is adaptable to the projection lens system shown in Fig. 10. Tables 14 represents third coefficient values defining a shape of aspherics 110, 120, 140 and 150 and a surface shape of diffractive optical element 140A as shown in Fig. 10.

Table 13

| LENS | LENS SURFACE | r | d | Nd | $\nu_d$ |
|---|---|---|---|---|---|
| 1ST LENS | S21 | 82.962 | 8.600 | 1.494000 | 57.8 |
| | S22 | 121.163 | 15.381 | | |
| 2ND LENS | S23 | 280.338 | 8.200 | 1.494000 | 57.8 |
| | S24 | 817.986 | 3.660 | | |
| 3RD LENS | S25 | 71.753 | 25.000 | 1.592000 | 62.0 |
| | S26 | -265.639 | 7.020 | | |
| 4TH LENS | S27 | -356.111 | 7.000 | 1.494000 | 57.8 |
| | S28 | -127.715 | 33.000 | | |
| 5TH LENS | S29 | -52.782 | 3.500 | 1.494000 | 57.8 |
| | S30 | -45.000 | 9.000 | 1.430000 | 62.8 |
| CRT PANEL | S31 | Infinity | 14.1 | 1.563000 | 55.2 |
| | S32 | -350.0 | 0 | | |

TABLE 14

| LENS SURFACE | K | A | B | C | D | E |
|---|---|---|---|---|---|---|
| S21 | -10.525000 | 1.446E-06 | -2.585E-09 | -2.577E-13 | 6.292E-16 | -1.224E-19 |
| S22 | 0.000000 | 5.697E-07 | -2.303E-09 | -1.592E-13 | 5.906E-16 | -1.153E-19 |
| S23 | -10.000000 | 1.717E-06 | -3.481E-10 | -1.286E-12 | 4.009E-16 | 0.000E+00 |
| S24 | 0.000000 | 7.759E-07 | -3.480E-10 | -9.128E-13 | 2.923E-16 | 0.000E+00 |
| S27 | -85.58500 | 3.547E-07 | -1.366E-09 | 2.086E-12 | 4.252E-16 | 0.000E+00 |
| S27(DOE) | 0.000000 | -2.546E-04 | 0.000000 | 0.000000 | 0.000000 | 0.000000 |
| S28 | -45.04800 | 1.599E-06 | 1.098E-09 | 4.231E-13 | 1.535E-16 | 0.000E+00 |
| S29 | 0.000000 | 6.856E-06 | 8.342E-09 | -1.223E-11 | 8.706E-15 | -2.530E-18 |
| S30 | 0.000000 | 0.000E+00 | 0.000E+00 | 0.000E+00 | 0.000E+00 | 0.000E+00 |

On the basis of the data represented in tables 13 and 14, the shape of each lens included in the projection lens system according to embodiment of the present invention is decided and designed. Also, there will be described a treating method of the aspheric lens. Actually, the front face of the first lens 110 having the radius of 82.962 is formed by which A to E positions on the spherical lens having a constant radius curvature are treated to correspond to the coefficients in table 14. The first, second, fourth and fifth lenses 110, 120, 140 and 150 are formed by the same treating process.

As described above, the projection lens system according to the present invention employs a diffractive optical element to correct a color aberration and a spherical aberration, etc., so that it is capable of implementing a high resolution without adding the lenses of flint series as well as reducing the manufacturing cost. Also, the projection lens system according to the present invention employs a diffractive optical element to reduce a focal length, so that a thin-type device and a high brightness can be obtained.

Although the present invention has been explained by the embodiments shown in the drawings described above, it should be understood to the ordinary skilled person in the art that the invention is not limited to the embodiments, but rather that various changes or modifications thereof are possible without departing from the spirit of the invention. Accordingly, the scope of the invention shall be determined only by the appended claims and their equivalents.

**Claims**

1. A projection lens system, comprising:

   a plurality of lenses; and
   at least one diffractive optical element formed on at least one among the surfaces of the lenses.

2. The projection lens system according to claim 1, wherein one surface of the diffractive optical element includes a groove having a rotation symmetry on a spherical surface.

3. The projection lens system according to claim 1, wherein one surface of the diffractive optical element includes a groove having a rotation symmetry on a plane surface.

4. The projection lens system according to claim 1, wherein the diffractive optical element includes a positive refractive power.

5. The projection lens system according to claim 1, wherein the diffractive optical element includes a negative refractive power.

6. The projection lens system according to claim 1, wherein one surface of the diffractive optical element includes a pitch of grooves having a rotation symmetry on a spherical surface.

7. The projection lens system according to claim 1, wherein one surface of the diffractive optical element includes a pitch of grooves having a rotation symmetry on a plane surface.

8. A projection lens system, comprising:

   a plurality of refractive lenses; and
   at least one diffractive optical element formed on at least one among the faces of the refractive lenses to correct chromatic aberrations at on axis and off axis.

9. The projection lens system according to claim 8, wherein one surface of the diffractive optical element includes a groove having a rotation symmetry on a spherical surface.

10. The projection lens system according to claim 8, wherein one surface of the diffractive optical element includes a groove having a rotation symmetry on a plane surface.

11. The projection lens system according to claim 8, wherein the diffractive optical element has a positive refractive power.

12. The projection lens system according to claim 8, wherein the diffractive optical element has a negative refractive power.

13. The projection lens system according to claim 8, wherein one surface of the diffractive optical element includes a pitch of grooves having a rotation symmetry on a spherical surface.

14. The projection lens system according to claim 8, wherein one surface of the diffractive optical element includes a pitch of grooves having a rotation symmetry on a plane surface.

**15.** A projection lens system, comprising:

a first lens for correcting an aberration generated by a variation of height from a light axis, the first lens having at least one surface formed with diffractive optical element thereon;
a second lens for refracting lights passed through the first lens; and
a third lens for correcting a field curvature and an astigmatism of the lights passed through the second lens.

**16.** The projection lens system according to claim 15, wherein the first lens has a side of aspheric surface and another side of diffractive optical surface.

**17.** The projection lens system according to claim 15, wherein one surface of the diffractive optical element includes a groove having a rotation symmetry on a spherical surface.

**18.** The projection lens system according to claim 15, wherein one surface of the diffractive optical element includes a groove having a rotation symmetry on a plane surface.

**19.** A projection lens system, comprising:

a first lens having a positive refractive power at the center thereof and a negative refractive power at the peripheral thereof;
a second lens having a relatively large positive refractive power;
a third lens having a positive refractive power;
a fourth lens having a negative refractive power; and
a diffractive optical element formed on at least one surface of said lenses.

**20.** The projection lens system according to claim 19, wherein said first, third and fourth lenses are designed to have a aspheric surface.

**21.** The projection lens system according to claim 19, wherein one surface of said first lens is designed to have a aspheric surface and the other surface of said first lens is designed into a surface of the diffractive optical element.

**22.** The projection lens system according to claim 19, wherein one surface of said third lens is designed to have an aspheric surface and the other surface of said first lens is designed into a surface of the diffractive optical element.

**23.** The projection lens system according to claim 19, wherein a plurality of recesses with a shape of concentric circles are provided at the diffractive optical element in such a manner to have a rotational symmetry.

**24.** The projection lens system according to claim 23, wherein pitches of said recesses are decreased in such a manner that a phase amount is reduced as it goes from the center of the diffractive optical element into the peripheral thereof.

**25.** The projection lens system according to claim 19, wherein at least one of said lenses is made from a plastic.

**26.** A projection lens system, comprising:

a first lens having a weak refractive power;
a second lens having a weak refractive power;
a third lens having a strong positive refractive power;
a fourth lens for correcting an aberration generated by the third lens;
a fifth lens having a negative refractive power; and
at least one diffractive optical element formed on at least one among the surfaces of the lenses.

**27.** The projection lens system according to claim 26, wherein the first lens has an upper surface of convex shape, both side of the second lens are in convex surface, and the fourth lens includes at one surface having a diffractive optical element.

**28.** The projection lens system according to claim 26, wherein one surface of said first lens is designed to have an aspheric surface and the other surface of said first lens is designed into a surface of the diffractive optical element.

**29.** The projection lens system according to claim 26, wherein one surface of said second lens is designed to have an aspheric surface and the other surface of said second lens is designed into a surface of the diffractive optical element.

**30.** The projection lens system according to claim 26, wherein one surface of said fourth lens is designed to have an aspheric surface and the other surface of said fourth lens is designed into a surface of the diffractive optical element.

**31.** The projection lens system according to claim 26, wherein the fourth lens has a weak refractive power.

**32.** The projection lens system according to claim 26, wherein the diffractive optical element has a positive refractive power.

**33.** The projection lens system according to claim 26, wherein the diffractive optical element has a negative refractive power.

**34.** The projection lens system according to claim 26, wherein one surface of the diffractive optical element includes a plurality of grooves having a rotation symmetry and a shape of concentrical circles.

**35.** The projection lens system according to claim 26, wherein the diffractive optical element includes a pitch of groove, which is gradually small to allowing a phase amount to decrease along with from the center to the outside of the diffractive optical element.

**36.** The projection lens system according to claim 26, wherein the second lens has a negative refractive power.

**37.** The projection lens system according to claim 26, wherein at least one among the lenses is made from a plastic material.

**38.** A projection device comprising a projection lens system according to any preceding claim.

# FIG.1A
## RELATED ART

# FIG.1B
## RELATED ART

# FIG.2
## RELATED ART

# FIG.3

# FIG.4

# FIG.5

# FIG.6

# FIG.7A

# FIG.7B

# FIG.8

# FIG.9A

# FIG.9B

# FIG.10